# EUROPÄISCHE PATENTSCHRIFT

(11) **EP 3 377 316 B1**
(45) Veröffentlichungstag und Bekanntmachung des Hinweises auf die Patenterteilung: **11.02.2026**
(21) Anmeldenummer: 16707660.3
(22) Anmeldetag: 17.02.2016
(51) Int. Cl.: B32B 17/10, B60J 1/17, B29C 45/14, E05F 11/38, E06B 3/66, E06B 3/673

(54) **VERBUNDGLASSCHEIBE MIT EINEM BEFESTIGUNGSLOCH**
LAMINATED GLAZING WITH A FASTENING HOLE
VITRAGE FEUILLETÉ AYANT UN TROU DE FIXATION

(30) Priorität: 17.11.2015 US 201562256658 P
(43) Veröffentlichungstag der Anmeldung: 26.09.2018
(73) Patentinhaber: Saint-Gobain Sekurit France, 60150 Thourotte (FR)
(72) Erfinder: UEBELACKER, Stefan, 52068 Aachen (DE); KÖTTE, Rolf, 52477 Alsdorf (DE); VON AVENARIUS, Wolfgang, 52134 Herzogenrath (DE); PARIJ, Gerry R., Warren, Michigan 48092 (US)
(74) Vertreter: Gebauer, Dieter Edmund
(86) Internationale Anmeldenummer: PCT/EP2016/053337
(87) Internationale Veröffentlichungsnummer: WO 2017/084767

(56) Entgegenhaltungen:
- EP-A2- 0 533 566
- CN-A- 104 476 855
- DE-A1- 102004 003 960
- DE-A1- 19 909 088
- DE-A1- 4 130 823
- DE-A1- 4 223 694
- DE-C1- 4 311 442
- DE-U1- 20 107 806
- JP-A- 2005 320 214
- JP-B2- 4 399 046
- US-A- 5 138 804

## Beschreibung

Die Erfindung betrifft eine Verbundglasscheibe mit einem Befestigungsloch und ein Verfahren zu deren Herstellung.

Kraftfahrzeuge verfügen typischerweise über öffenbare Seitenfenster. Solche Seitenfenster sind mit einer Seitenscheibe versehen, welche sich durch im Wesentlichen vertikale Verschiebung bewegen lässt, wodurch das Seitenfenster geöffnet und geschlossen werden kann. Um das Fenster bewegen zu können, ist es mit einem Mechanismus im Inneren der Fahrzeugkarosserie verbunden.

Seitenscheiben von Kraftfahrzeugen sind meist als Einscheibensicherheitsglas (ESG) ausgebildet, bestehen also aus einer einzelnen, thermisch vorgespannten Glasscheibe. Diese Seitenscheiben sind typischerweise mit einem oder mehreren Löchern in der Nähe der Unterkante ausgestattet, die zur Anbindung an den Verschiebemechanismus dienen. Solche Löcher sind in ESG-Scheibe sind recht einfach zu erzeugen und ermöglichen eine einfache und sehr stabile Montage.

Es sind aber zunehmend auch Seitenscheiben gebräuchlich, die als Verbundsicherheitsglas (VSG) ausgebildet sind, insbesondere für Fahrzeuge höherer Preisklassen. Diese Seitenscheiben bestehen aus zwei nicht-vorgespannten Glasscheiben, die mittels Lamination über eine thermoplastische Zwischenschicht (typischerweise eine PVB-Folie) miteinander verbunden sind. Diese Seitenscheiben weisen ein geringeres Gewicht auf als ESG-Seitenscheiben und verbessern den akustischen Komfort im Fahrzeug sowie die Einbruchssicherheit. Da VSG-Scheibe mit Löchern schwieriger herzustellen sind und weniger stabil sind als bei ESG-Scheiben, werden VSG-Seitenscheiben herkömmlich auf andere Weise mit dem Verschiebemechanismus verbunden: ein Halter wird an die Unterkante angeklemmt oder angeklebt.

Da die Anbringung der Seitenscheibe an den Verschiebemechanismus mittels eines Loches bevorzugt ist, besteht Bedarf an laminierten Seitenscheiben mit Befestigungslöchern. Es besteht dabei insbesondere das Problem, die Löcher in den beiden Einzelscheiben exakt übereinander zu positionieren. Häufig tritt ein gewisser Versatz zwischen den Löchern auf, der im Rahmen einer Produktionsserie auch nicht unbedingt konstant ist. Dies erschwert die Montage von Halterungen oder Anbauteilen im Loch.

Die US 2008/0092464 A1 offenbart eine Verbundglasscheibe mit einer Befestigungsausnehmung, in die von beiden Seiten drehbare Bauteile mit jeweils einem außerzentrisch angeordneten Loch eingeführt sind. Durch Drehen der Bauteile gegeneinander können die Löcher in Deckung gebracht werden, sodass sich unabhängig von einem etwaigen Versatz der Glasscheiben ein Befestigungsloch reproduzierbarer Form und Größe ergibt. Das Befestigungssystem gemäß US 2008/0092464 A1 ist aufgrund seiner vielteiligen Ausgestaltung aber kompliziert und fehleranfällig.

CN 104476855 A offenbart eine Verbundscheibe mit einem einstückigen polymeren Verstärkungselement, das angespritzt ist. DE 4224694 A1 offenbart eine Verbundscheibe mit einem Glashalteelement, bei dem ein Gewindebolzen mit einer umgebenden Hülse zur Anwendung gelangt.

Der vorliegenden Erfindung liegt die Aufgabe zugrunde, eine verbesserte Verbundglasscheibe mit einem Befestigungsloch bereitzustellen, die trotz eines eventuellen Versatzes der Glasscheiben das Anbringen von Anbauteilen, Befestigungsvorrichtungen oder ähnlichem ermöglicht und einfach herzustellen ist.

Die Aufgabe der vorliegenden Erfindung wird erfindungsgemäß durch eine Verbundglasscheibe gemäß Anspruch 1 gelöst. Bevorzugte Ausführungen gehen aus den Unteransprüchen hervor.

Die erfindungsgemäße Verbundglasscheibe umfasst mindestens eine erste Scheibe und eine zweite Scheibe, die über eine thermoplastische Zwischenschicht miteinander verbunden sind. Die erfindungsgemäße Verbundscheibe weist mindestens eine Durchführung auf. Die Durchführung erstreckt sich durch die gesamte Verbundglasscheibe, also durch die erste Scheibe, die Zwischenschicht und die zweite Scheibe.

Die Verbundglasscheibe ist dafür vorgesehen, einen Innenraum von einer äußeren Umgebung abzutrennen. Die Verbundglasscheibe ist eine Fahrzeugscheibe, trennt also einen Fahrzeuginnenraum von der äußeren Umgebung. Die beiden Scheiben können daher auch als Außenscheibe und Innenscheibe bezeichnet werden. Mit Innenscheibe wird dabei diejenige Scheibe bezeichnet, welche in Einbaulage dem Innenraum zugewandt ist. Mit Außenscheibe wird diejenige Scheibe bezeichnet, welche in Einbaulage der äußeren Umgebung zugewandt ist.

Um die Durchführung zu bilden, weisen die erste Scheibe, die zweite Scheibe und die Zwischenschicht ein Loch auf. Besagte Löcher überlappen einander vollständig oder zumindest teilweise, so dass die Durchführung durch die überlappenden Bereiche der Löcher ausgebildet wird.

Idealerweise haben die Löcher in den Scheiben und bevorzugt auch in der Zwischenschicht die gleiche Größe. Es ist jedoch bei der Herstellung eines solchen Verbundglases schwierig, die Löcher vollständig exakt übereinander zu positionieren, so dass ein Versatz zwischen den Kanten der Löcher auftreten kann. Dieses Problem tritt in besonderem Ausmaß bei gebogenen Verbundglasscheiben auf, wie sie im Fahrzeugbereich üblich sind, weil die Biegung der Scheiben zu weiteren Problemen bei der Überlagerung der Löcher führt. Ein solcher Versatz kann Probleme bei der bestimmungsgemäßen Verwendung der Durchführung hervorrufen. Typischerweise wird in der Durchführung ein Bauteil befestigt, beispielsweise eine Haltevorrichtung oder ein Mechanismus, der die Scheibe hält und bewegt, oder ein Anbauteil. Ein in der Regel unbeabsichtigt und nicht reproduzierbar auftretender Versatz kann die Befestigung stören, weil die Durchführung, welche sich gleichsam als Schnittmenge der überlagerten Löcher ergibt, innerhalb der Produktionsserie nicht exakt gleich und konstant.

Um einen Versatz zu kompensieren, ist die Verbundglasscheibe erfindungsgemäß mit einem einstückig ausgebildeten, polymeren Element ausgestattet. Die Kante der Durchführung ist mit dem Kompensierungselement versehen. Das Kompensierungselement verschließt die Durchführung nicht vollständig, sondern weist seinerseits ebenfalls eine Durchführung oder ein durchgehendes Loch auf oder bildet ein solches durchgehendes Loch aus. Dieses Loch des polymeren Elements verläuft durch die Durchführung der Verbundglasscheibe hindurch, ist also innerhalb der Durchführung der Verbundglasscheibe angeordnet. Durch das Kompensierungselement wird sichergestellt, dass in einer Produktionsserie jede Verbundglasscheibe ein Befestigungsloch gleicher Größe aufweist, weil Größe und Form des Befestigungslochs durch das durchgehende Loch im polymeren Element definiert werden. Ein Versatz zwischen den Glasscheiben spielt keine Rolle, er wird durch das polymere Element kompensiert. Das polymere Element kann daher auch als Kompensierungselement bezeichnet werden. Durch die einstückige Ausbildung des Kompensationselements ist das Kompensationselement sehr robust, die Verbindung mit der Scheibe sehr stabil und die Herstellung vergleichsweise einfach. Das sind große Vorteile der Erfindung.

Das polymere Element ist dafür vorgesehen und geeignet, einen Versatz zwischen den Scheiben zu kompensieren. Das polymere Element ist weiter dafür vorgesehen und geeignet, ein Anbauteil oder Befestigungselement an der Scheibe zu befestigen, insbesondere durch Einführen eines Befestigungsabschnitts, beispielsweise eines Befestigungsstifts, in das Loch des polymeren Elements. Das polymere Element ist weiter dafür vorgesehen und geeignet, durch das an der Scheibe befestigte Anbauteil oder Befestigungselement auf die Verbundglasscheibe wirkende Kräfte kontrolliert in die Verbundglasscheibe einzuleiten, bevorzugt gleichmäßig auf die Einzelscheiben zu verteilen.

Die Kante der Durchführung ist im Sinne der Erfindung die innerhalb der Durchführung angeordnete Kante der Verbundglasscheibe, welche die Durchführung begrenzt, bestehend aus den entsprechenden Seitenkanten der beiden Scheiben und der Zwischenschicht. Das Kompensierungselement ist auf einem Teil der Kante oder auf der gesamten Kante der Durchführung angeordnet. Das Kompensierungselement kann mit diesem Teil der Kante oder der gesamten Kante der Durchführung in direktem Kontakt stehen oder über einen Haftvermittler oder Klebstoff damit verbunden sein.

Das Kompensierungselement ist vollständig innerhalb der Fläche der Verbundglasscheibe angeordnet. Das bedeutet, dass das Kompensierungselement nicht über die die Verbundglasscheibe begrenzenden Seitenkanten übersteht. Es ist auf die Durchführung der Verbundglasscheibe beschränkt und unterscheidet sich daher grundlegend von polymeren Befestigungselementen, die im Bereich einer Seitenkante befestigt sind und über diese überstehen, um im überstehenden Bereich eine Befestigungsmöglichkeit bereitzustellen.

Der Versatz zwischen den Löchern in der ersten und der zweiten Scheibe beträgt beispielsweise bis zu 5 mm oder bis zu 2 mm. Die Erfindung ist natürlich dann besonders vorteilhaft, wenn ein Versatz größer 0 mm, beispielsweise größer 0,1 mm, auftritt, wobei man im Rahmen einer Massenfertigung allerdings auch solche Scheiben mit einem Kompensierungselement versehen würde, welche infolge der Fertigungsstreuung keinen Versatz aufweisen. Der Versatz kann beispielsweise von 0,1 mm bis 5 mm oder von 0,1 mm bis 2 mm betragen.

Die Löcher in der ersten und der zweiten Scheibe können die gleiche Größe aufweisen. Alternativ ist es aber auch möglich, dass die Löcher unterschiedliche Größen aufweisen. So kann es beispielsweise hinsichtlich der Positionierung der Scheiben bei der Herstellung einfacher sein, ein kleineres Loch innerhalb der Fläche eines größeren Lochs anzuordnen und die auftretende Größendifferenz durch das erfindungsgemäße Kompensierungselement auszugleichen.

Die Größe der Durchführung in der Verbundglasscheibe und die Größe des Lochs im Kompensierungselement richten sich nach den Erfordernissen im Einzelfall. Typischerweise liegt die Größe von Durchführung und Loch im Bereich von 5 mm bis 100 mm, meist von 10 mm bis 30 mm. Das sind typische Größen für Befestigungslöcher. Naturgemäß ist die Größe des Lochs im Kompensierungselement geringer als die Größe der Durchführung der Verbundglasscheibe, da das Kompensierungselement innerhalb dieser Durchführung angeordnet ist. Die Größe des Lochs im Kompensierungselement beträgt bevorzugt von 50 % bis 90 % der Größe der Durchführung, besonders bevorzugt von 60 % bis 80 %. Damit kann ein Versatz zwischen den Scheiben wirksam kompensiert werden, es wird eine stabile Anbindungsstelle für Anbauteile bereitgestellt, das Befestigungsloch wird aber auch nicht allzu sehr verkleinert, sodass eine Verbindung mit dem Anbauteil problemlos möglich ist.

Das Loch im Befestigungselement ist bevorzugt im Wesentlichen kreisrund, worauf die meisten herkömmlichen Befestigungssysteme oder Anbauteile ausgelegt sind. Das Loch kann aber je nach den Erfordernissen im Einzelfall auch jede beliebige andere Form aufweisen, beispielsweise eine elliptische Form oder auch eine unregelmäßige Form.

In einer Ausgestaltung, welche in den Patentansprüchen nicht beansprucht ist, ist das polymere Element durch Spritzguss in der Durchführung ausgebildet, bedeckt die Kante der Durchführung komplett und steht mit der gesamten Kante in Kontakt. Typischerweise bedeckt das polymere Element neben der Kante der Durchführung auch einen an die Durchführung grenzenden, umlaufenden Bereich der voneinander abgewandten Oberflächen der ersten und zweiten Scheibe (Außenflächen der Verbundglasscheibe). Das polymere Element ist direkt an die Verbundglasscheibe angespritzt. Ein solches Kompensationselement ist sehr robust und stabil und weniger fehleranfällig als beispielsweise Kompensationselemente, die zweistückig gebildet sind, von beiden Seiten in die Durchführung eingeführt und dort miteinander verbunden werden, etwa über eine Schraub- oder Klickverbindung.

Die Materialstärke des spritzgegossenen Kompensierungselements, gemessen senkrecht zur Kante der Durchführung und gegebenenfalls bevorzugt auch im umlaufenden Bereich der Außenflächen gemessen senkrecht zu diesen, beträgt bevorzugt von 1 mm bis 10 mm, besonders bevorzugt von 1,5 mm bis 5 mm, insbesondere von 1,5 mm bis 3 mm. Der umlaufende Bereich der Außenflächen der Verbundglasscheibe um die Durchführung, der vom Kompensierungselement bedeckt ist, weist bevorzugt eine Breite von 2 mm bis 20 mm, besonders bevorzugt von 3 mm bis 10 mm, insbesondere von 3 mm bis 5 mm. So wird eine sehr stabile Verbindung von Verbundglasscheibe und Kompensierungselement erreicht. Während die Breite mindestens 2 mm oder 3 mm betragen sollte, um eine ausreichende Stabilität zu gewährleisten, ist die Obergrenze technisch prinzipiell nur von den Scheibenrändern festgelegt und unterliegt sonst keinen Beschränkungen, wobei eine zu große Breite die Materialkosten des Kompensierungselements in die Höhe treibt.

Erfindungsgemäß ist das polymere Element ein Toleranzring. Toleranzringe sind dem Fachmann an sich bekannt. Es sind Streifen mit einer profilierten Oberflächengestaltung, dessen Enden ringartig zusammengeführt sind und dadurch ein Loch ausbilden. Toleranzringe dienen meist als reibschlüssige Verbindungselemente eingesetzt, insbesondere im Maschinenbau. Sie sind dort beispielsweise aus Federstahl gefertigt. Die Erfinder haben erkannt, dass ein polymerer Toleranzring dazu verwendet werden kann, das erfindungsgemäße Loch auszubilden und den Versatz der Löcher in den Glasscheiben zu kompensieren, ohne mit der Gefahr einer Beschädigung der Verbundglasscheibe einherzugehen.

Die Materialstärke des Toleranzrings beträgt bevorzugt von 1 mm bis 5 mm, besonders bevorzugt von 1 mm bis 2 mm.

Das polymere Kompensationselement enthält bevorzugt zumindest ein thermoplastisches Polymer. Das Polymer kann mit Glasfasern oder Glaskugeln verstärkt sein, um eine ähnliche thermische Ausdehnung wie die Glasscheiben zu haben. Bevorzugte Materialen sind insbesondere Polyamid oder Polybutylenterephthalat, aber auch Polyethylen, Polypropylen, Polystyrol, Polyoxymethylen, Polycarbonat, Polymethylmethacrylat, Polyester, Polyvinylchlorid, Polysulfon, Polyethersulfon Polyetherketon oder Polytetrafluorethylen können verwendet werden. Es können auch Mischungen oder Copolymere verwendet werden. In einer vorteilhaften Weiterbildung der Erfindung enthält das Kompensationselement zumindest ein thermoplastisches Elastomer, wodurch auch kleinere Abweichungen der Scheibenanordnung, beispielsweise Winkelabweichungen, ausgeglichen werden können. Besonders bevorzugt besteht das Kompensationselement aus einem der genannten Materialien.

Die erfindungsgemäße Verbundglasscheibe kann plan sein oder in einer oder mehreren Raumrichtungen gebogen. Das erfindungsgemäße Kompensierungselement ist besonders vorteilhaft bei gebogenen Verbundglasscheiben, weil es dort insbesondere schwierig ist, die Löcher in den Einzelscheiben ohne Versatz zu überlagern. Die Verbundglasscheibe ist bevorzugt eine Kraftfahrzeugscheibe, insbesondere eine Scheibe eines Personenkraftwagens, welche typischerweise gebogen sind.

In einer vorteilhaften Ausgestaltung ist die erfindungsgemäße Verbundglasscheibe eine öffenbare Seitenscheibe eines Kraftfahrzeugs, insbesondere eines Personenkraftwagens. Darunter wird eine Scheibe für ein Seitenfenster verstanden, welches sich durch im Wesentlichen vertikale Verschiebung der Seitenscheibe in die Karosserie hinein öffnen und wieder schließen lässt. Typischerweise weisen solche Seitenscheiben mehrere, insbesondere zwei Durchführungen auf. Die Durchführung oder Durchführungen sind im Bereich der Unterkante (in Einbaulage dem Erdboden zugewandt) angeordnet, wo sie im geöffneten und auch im geschlossenen Zustand des Fensters in der Fahrzeugkarosserie verborgen sind. Das Loch im Kompensationselement ist dabei zur Verbindung mit einem in der Fahrzeugkarosserie angeordneten Hebemechanismus vorgesehen, um die Scheibe zu befestigen, insbesondere durch Einführen eines Befestigungsabschnitts des Hebemechanismus, beispielsweise eines Befestigungsstifts, in das Loch. Dadurch kann auf aufwendige, an der Unterkante der Seitenscheibe angebrachte Halter verzichtet werden, die bislang für laminierte Seitenscheiben verbreitet sind.

Gezeigt, aber in den Patentansprüchen nicht beansprucht, ist auch die Anordnung aus einer Fahrzeugkarosserie mit einem darin angeordneten Hebemechanismus für ein öffenbares Seitenfenster und einer erfindungsgemäßen Verbundglasscheibe als Seitenscheibe, wobei ein Verbindungselement des Hebemechanismus in dem Loch des Kompensierungselements angeordnet ist, um die Seitenscheibe mit dem Hebemechanismus zu verbinden.

Die erfindungsgemäße Verbundglasscheibe kann aber auch für andere Einsatzgebiete vorgesehen sein. Das Loch kann dazu dienen, Anbauteile an der Verbundglasscheibe zu befestigen. Beispielsweise kann das Verbundglas eine Fahrzeug-Dachscheibe sein, wobei im Loch eine Antenne angebracht wird. Das Verbundglas kann aber auch beispielsweise ein transparenter Heizkörper sein, wobei Löcher zur Befestigung an der Wand vorgesehen sind.

Die erste Scheibe und die zweite Scheibe enthalten bevorzugt Glas, insbesondere Kalk-Natron-Glas. Grundsätzlich kann einer der Scheiben oder auch beide Scheiben auch starre Kunststoffe enthalten, insbesondere Polycarbonat, oder Polymethylmethacrylat. Die Dicke der Scheiben kann breit variieren und so hervorragend den Erfordernissen im Einzelfall angepasst werden. Vorzugsweise betragen die Dicken der ersten und der zweiten Scheibe von 0,5 mm bis 10 mm und bevorzugt von 1 mm bis 5 mm, ganz besonders bevorzugt von 1,4 mm bis 3 mm.

Die erste Scheibe, die zweite Scheibe oder die Zwischenschicht können klar und farblos, aber auch getönt, getrübt oder gefärbt sein. Die erste und die zweite Scheibe können aus nicht vorgespanntem, teilvorgespanntem oder vorgespanntem Glas bestehen.

Die thermoplastische Zwischenschicht wird durch mindestens eine thermoplastische Verbindungsfolie gebildet. Die thermoplastische Verbindungsfolie enthält zumindest ein thermoplastisches Polymer, bevorzugt Ethylenvinylacetat (EVA), Polyvinylbutyral (PVB) oder Polyurethan (PU) oder Gemische oder Copolymere oder Derivate davon, besonders bevorzugt PVB. Die Dicke der thermoplastischen Verbindungsfolie beträgt bevorzugt von 0,2 mm bis 2 mm, besonders bevorzugt von 0,3 mm bis 1 mm, beispielsweise 0,38 mm oder 0,76 mm.

Die Erfindung umfasst außerdem ein Verfahren zur Herstellung der erfindungsgemäßen Verbundglasscheibe mit einem durchgehenden Befestigungsloch, wobei:
(a) eine erste Scheibe und eine zweite Scheibe mit jeweils mindestens einem Loch versehen werden,
(b) die erste Scheibe, eine thermoplastische Zwischenschicht und die zweite Scheibe flächig in dieser Reihenfolge übereinander angeordnet werden, wobei besagte Löcher überlappen,
(c) die erste Scheibe mit der zweiten Scheibe über die Zwischenschicht durch Lamination verbunden wird, wobei die Verbundglasscheibe entsteht und wobei aus besagten Löchern und einem Loch in der Zwischenschicht eine durchgehende Durchführung gebildet wird,
(d) die Kante der Durchführung mit einem einstückig ausgebildeten, polymeren Element versehen wird, welches ein durchgehendes, durch die Durchführung verlaufendes Loch aufweist, wobei ein Toleranzring als polymeres Element in die Durchführung eingesetzt wird, wobei die Abmessung des Toleranzrings quer zum Ringdurchmesser der entsprechenden Abmessung der Durchführung entspricht, wobei der Toleranzring vollständig innerhalb der Fläche der Verbundglasscheibe angeordnet ist.

Das Loch in der thermoplastischen Zwischenschicht kann vor Verfahrensschritt (b) ausgebildet werden. Dann werden in Verfahrensschritt (b) die Löcher der Scheiben und das Loch der Zwischenschicht überlappend angeordnet. Das Verbundglas kann aber auch ohne Loch in der thermoplastischen Zwischenschicht laminiert werden und anschließend das Loch in der Zwischenschicht erzeugt werden, wobei die Durchführung entsteht.

Die Löcher in den Einzelscheiben werden durch Bohren oder andere, dem Fachmann an sich bekannte Verfahren erzeugt. Das Loch in der Zwischenschicht wird bevorzugt durch Schneiden oder Stanzen erzeugt.

Soll das Verbundglas gebogen sein, so werden die Einzelscheiben bevorzugt vor der Lamination gebogen, wobei alle fachüblichen Biegeverfahren geeignet sind. Das Biegen findet bevorzugt erst nach dem Erzeugen der Löcher in den Einzelscheiben statt, weil plane Scheiben einfacher mit Löchern zu versehen sind.

In einer in den Patentansprüchen nicht beanspruchten Ausführung wird in Schritt (d) der Bereich der Verbundglasscheibe mit der Durchführung zwischen zwei Spritzgussformen angeordnet und das polymere Element direkt an die Kante und optional einen die Durchführung umgebenden, umlaufenden Bereich der Außenflächen der Verbundglasscheibe angespritzt. Die Verbundglasscheibe kann zur besseren Haftung mit einem *Primer* oder Haftvermittler vorbehandelt werden.

In Schritt (d) wird ein polymerer Toleranzring in die Durchführung eingesetzt, welcher das erfindungsgemäße Loch ausbildet.

Die Herstellung des Verbundglases durch Lamination erfolgt mit üblichen, dem Fachmann an sich bekannten Methoden, beispielsweise Autoklavverfahren, Vakuumsackverfahren, Vakuumringverfahren, Kalanderverfahren, Vakuumlaminatoren oder Kombinationen davon. Die Verbindung von erster und zweiter Scheibe erfolgt dabei üblicherweise unter Einwirkung von Hitze, Vakuum und/oder Druck.

Im Folgenden wird die Erfindung anhand einer Zeichnung und Ausführungsbeispielen näher erläutert. Die Zeichnung ist eine schematische Darstellung und nicht maßstabsgetreu. Die Zeichnung schränkt die Erfindung in keiner Weise ein.

Es zeigen:
- Fig. 1: eine Draufsicht auf eine Ausgestaltung der Verbundglasscheibe, welche in den Patentansprüchen nicht beansprucht ist,
- Fig. 2: einen Schnitt entlang A-A' durch eine herkömmliche Verbundglasscheibe,
- Fig. 3: einen Schnitt entlang A-A' durch die Verbundglasscheibe aus Figur 1,
- Fig. 4: einen Schnitt entlang A-A' durch eine Ausgestaltung der erfindungsgemäßen Verbundglasscheibe,
- Fig. 5: ein Flussdiagramm einer Ausführungsform des Verfahrens zur Herstellung einer Verbundglasscheibe gemäß Figur 1.

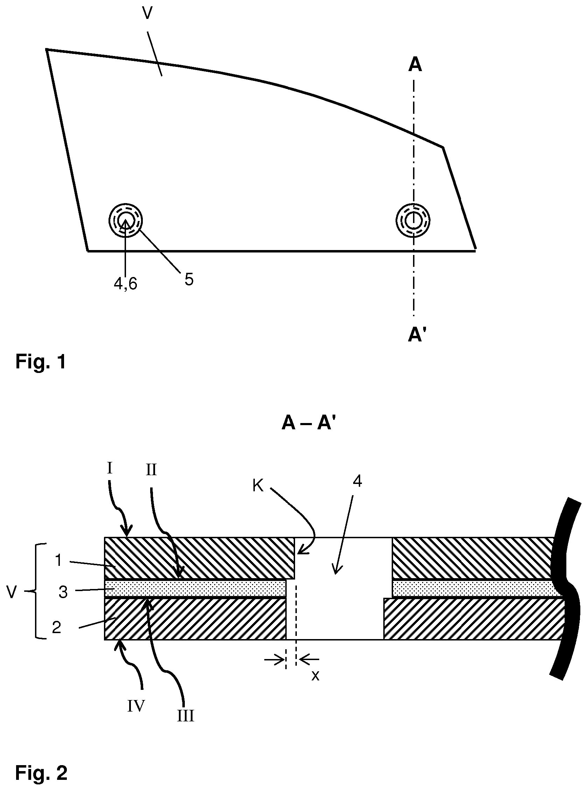

Fig. 1 zeigt eine Draufsicht auf eine Verbundglasscheibe V, die als öffenbare Seitenscheibe eines Personenkraftwagens ausgebildet ist. Die Verbundglasscheibe V ist als Seitenscheibe für das vordere Seitenfenster eines Personenkraftwagens vorgesehen, welches sich durch Herunterfahren der Seitenscheibe öffnen lässt. Die Verbundglasscheibe V weist in der Nähe der Unterkante zwei Befestigungslöcher auf, die zur Verbindung der Verbundglasscheibe V mit einem Hebemechanismus in einer Fahrzeugkarosserie vorgesehen sind. Eine Halterung des Hebemechanismus kann durch die Befestigungslöcher hindurchgeführt und befestigt werden, sodass die Scheibe sicher mit dem Hebemechanismus verbunden ist. Die Befestigungslöcher werden durch Durchführungen 4 in der Verbundglasscheibe V gebildet, in die ein polymeres Element 5 eingesetzt ist, welches ein durchgehendes Loch 6 aufweist, das durch die Durchführung 4 hindurch verläuft. Die Kanten der Durchführung 4 sind mit dem polymeren Element 5 versehen, ohne dass die Durchführung 4 komplett verschlossen wird.

Fig. 2 zeigt einen Querschnitt durch eine herkömmliche Verbundglasscheibe V ohne polymeres Element 5. Die Verbundglasscheibe V ist aufgebaut aus einer ersten Scheibe 1 und einer zweiten Scheibe 2, verbunden durch eine thermoplastische Zwischenschicht 3. Die beiden Scheiben 1, 2 bestehen beispielsweise aus Kalk-Natron-Glas und weisen eine Dicke von jeweils 2,1 mm auf. Die Zwischenschicht 3 ist beispielsweise durch eine PVB-Folie mit einer Dicke von 0,76 mm gebildet. Jede Scheibe 1, 2 sowie die Zwischenschicht 3 weisen ein Loch auf, durch deren Überlagerung die Durchführung 4 gebildet wird. Aufgrund fertigungstechnischer Toleranzen und/oder der typischen, nicht dargestellten Biegung der Verbundglasscheibe V sind die Löcher in den Scheiben 1, 2 nicht perfekt in Deckung angeordnet, sondern weisen einen Versatz x auf. Dieser Versatz x führt dazu, dass die effektive Größe der Durchführung 4 verringert wird und dass die exakte Form der Durchführung 4 im Rahmen einer Produktionsserie nicht konstant ist. Dies kann dazu führen, dass die bestimmungsgemäße Anbringung des Hebemechanismus in der Durchführung 4 erschwert wird oder schlimmstenfalls überhaupt nicht möglich ist.

Die erste Scheibe 1 ist als Außenscheibe vorgesehen, die zweite Scheibe 2 als Innenscheibe. Die einander zugewandten Oberflächen II, III der Scheiben 1, 2 sind über die Zwischenschicht 3 miteinander verbunden, die voneinander abgewandten Oberflächen I, IV der Scheiben 1, 2 bilden die Außenflächen der Verbundglasscheibe V.

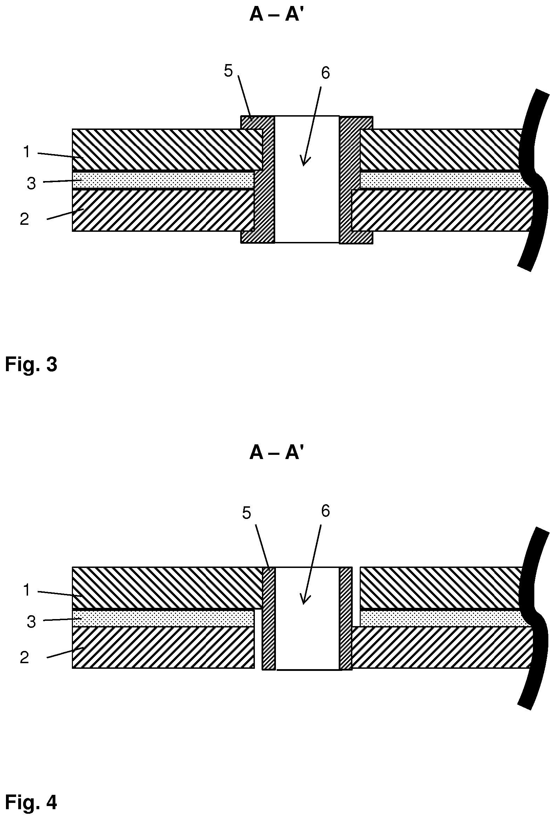

Fig. 3 zeigt einen Querschnitt durch die Ausgestaltung gemäß Figur 1, welche in den Patentansprüchen nicht beansprucht ist. Das polymere Element 5 bedeckt die Kante K der Durchführung 4 sowie einen Bereich der Außenflächen I, IV der Verbundglasscheibe V, der die Durchführung umlaufend umgibt mit einer Breite von 5 mm. Die Materialstärke des polymeren Elements 5 beträgt beispielsweise 3 mm. Das polymere Element 5 ist mittels eines Spritzgussverfahrens direkt an die Verbundglasscheibe V angespritzt. Es besteht beispielsweise aus Polyamid 6.6. Das polymere Element weist ein Loch 4 mit einem Durchmesser von beispielsweise 1,5 cm auf, das als eigentliches Befestigungsloch dient. Der Versatz x wird durch das polymere Element 5 kompensiert, so dass alle gefertigten Scheiben ein Befestigungsloch identischer Größe und Form aufweisen.

Fig. 4 zeigt einen Querschnitt durch eine Ausgestaltung der Erfindung. Das polymere Element 5 ist ein Toleranzring, der in die Durchführung 4 eingesetzt ist und ein Loch 6 ausbildet. Auch in dieser Ausgestaltung wird der Versatz vorteilhaft kompensiert und es entsteht ein Befestigungsloch ohne Stufen.

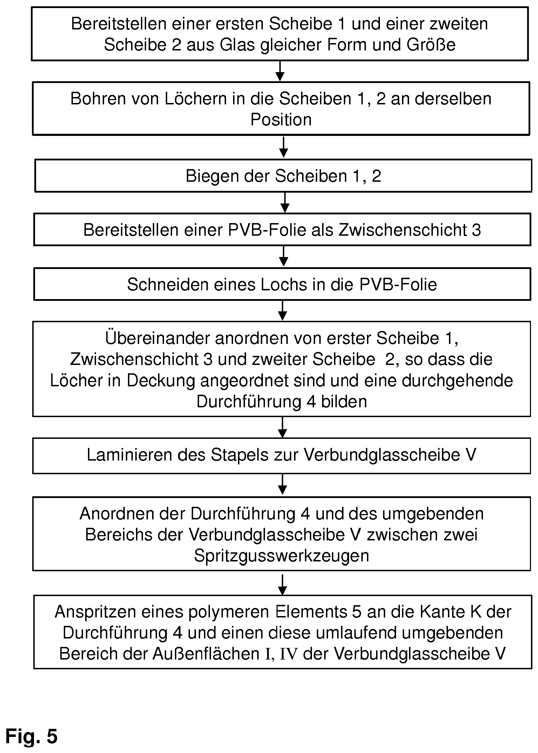

Fig. 5 zeigt ein Flussdiagramm eines Ausführungsbeispiels des Verfahrens zur Herstellung einer Verbundglasscheibe gemäß Figur 1.

### Bezugszeichenliste:

- (V): Verbundglasscheibe

- (1): erste Scheibe / Außenscheibe
- (2): zweite Scheibe / Innenscheibe
- (3): thermoplastische Zwischenschicht
- (4): Durchführung in der Verbundglasscheibe V
- (5): einstückiges polymeres Element / Kompensierungselement
- (6): Loch in Element 5

- (K): Kante der Durchführung 4
- (x): Versatz von erster Scheibe 1 und zweiter Scheibe 2

- I: Außenfläche der Außenscheibe 1
- II: Innenfläche der Außenscheibe 1
- III: Außenfläche der Innenscheibe 2
- IV: Innenfläche der Innenscheibe 2

- A-A': Schnittlinie

## Patentansprüche

1. Kraftfahrzeug-Verbundglasscheibe (V) mit einem durchgehenden Befestigungsloch, mindestens umfassend eine erste Scheibe (1) und eine zweite Scheibe (2), die über eine thermoplastische Zwischenschicht (3) miteinander verbunden sind, und mindestens eine Durchführung (4), die sich durch die gesamte Kraftfahrzeug-Verbundglasscheibe (V) erstreckt, und eine innerhalb der Durchführung angeordnete Kante (K) der Durchführung bestehend aus den entsprechenden Seitenkanten der beiden Scheiben (1, 2) und der Zwischenschicht (3), wobei die Kante (K) der Durchführung (4) mit einem einstückig ausgebildeten, polymeren Element (5) mit einem durchgehenden, durch die Durchführung (4) verlaufenden Loch (6) versehen ist, wobei die erste Scheibe (1), die zweite Scheibe (2) und die Zwischenschicht (3) mit einem Loch ausgebildet sind und sich die besagten Löcher teilweise überlappen, wodurch die Durchführung (4) in der Verbundglasscheibe (V) gebildet wird, wobei die Kanten der Löcher in der ersten Scheibe (1) und der zweite Scheibe (2) einen Versatz (x) aufweisen, wobei das polymere Element (5) ein Toleranzring ist, dessen Abmessung quer zum Ringdurchmesser der entsprechenden Abmessung der Durchführung (4) entspricht, wobei der Toleranzring vollständig innerhalb der Fläche der Verbundglasscheibe angeordnet ist.

2. Kraftfahrzeug-Verbundglasscheibe (V) nach Anspruch 1, wobei das polymere Element (5) mit Glasfasern oder Glaskugeln verstärkt ist und bevorzugt zumindest Polyamid oder Polybutylenterephthalat enthält.

3. Kraftfahrzeug-Verbundglasscheibe (V) nach einem der Ansprüche 1 oder 2, wobei die Größe des Lochs (6) von 50 % bis 90 % der Größe der Durchführung (4) beträgt, bevorzugt von 60 % bis 80 %.

4. Kraftfahrzeug-Verbundglasscheibe (V) nach einem der Ansprüche 1 bis 3, wobei das Loch (6) kreisrund ist.

5. Kraftfahrzeug-Verbundglasscheibe nach einem der Ansprüche 1 bis 4, wobei die Verbundglasscheibe (V) eine zu öffnende Seitenscheibe eines Kraftfahrzeugs ist und das Loch (6) zur Verbindung mit einem in der Fahrzeugkarosserie angeordneten Hebemechanismus vorgesehen ist.

6. Kraftfahrzeug-Verbundglasscheibe nach einem der Ansprüche 1 bis 5, wobei die erste Scheibe (1) und die zweite Scheibe (2) Glas enthalten, bevorzugt Kalk-Natron-Glas.

7. Verfahren zur Herstellung einer Kraftfahrzeug-Verbundglasscheibe (V) mit einem durchgehenden Befestigungsloch nach einem der Ansprüche 1 bis 6, bei welchem:
(a) eine erste Scheibe (1) und eine zweite Scheibe (2) mit jeweils mindestens einem Loch versehen werden,
(b) die erste Scheibe (1), eine thermoplastische Zwischenschicht (3) und die zweite Scheibe (2) flächig übereinander angeordnet werden, wobei besagte Löcher überlappen,
(c) die erste Scheibe (1) mit der zweiten Scheibe (2) über die Zwischenschicht (3) durch Lamination verbunden wird, wobei die Verbundglasscheibe (V) entsteht und wobei aus besagten Löchern und einem Loch in der Zwischenschicht (3) eine durchgehende Durchführung (4) gebildet wird,
(d) die Kante (K) der Durchführung (4) mit einem einstückig ausgebildeten, polymeren Element (5) versehen wird, welches ein durchgehendes, durch die Durchführung (4) verlaufendes Loch (6) aufweist, wobei ein Toleranzring als polymeres Element (5) in die Durchführung (4) eingesetzt wird, wobei die Abmessung des Toleranzrings quer zum Ringdurchmesser der entsprechenden Abmessung der Durchführung (4) entspricht, wobei der Toleranzring vollständig innerhalb der Fläche der Verbundglasscheibe angeordnet ist.

## Claims

1. Automotive composite glass pane (V) with a through mounting hole, comprising at least a first pane (1) and a second pane (2), which are connected to each other by a thermoplastic interlayer (3), and at least one passage (4) extending through the entire automotive composite glass pane (V), and an edge (K) of the passage arranged within the passage, consisting of the corresponding side edges of the two panes (1, 2) and the interlayer (3), wherein the edge (K) of the passage (4) is provided with a one-piece polymeric element (5) with a through hole (6) extending through the passage (4), wherein the first pane (1), the second pane (2) and the intermediate layer (3) are formed with a hole and said holes partially overlap, thereby forming the passage (4) in the composite glass pane (V), wherein the edges of the holes in the first pane (1) and the second pane (2) have an offset (x), wherein the polymeric element (5) is a tolerance ring whose dimension transverse to the ring diameter corresponds to the corresponding dimension of the passage (4), the tolerance ring being located entirely within the area of the composite glass pane.

2. Automotive composite glass pane (V) according to claim 1, wherein the polymeric element (5) is reinforced with glass fibers or glass beads and preferably contains at least polyamide or polybutylene terephthalate.

3. Automotive composite glass pane (V) according to one of claims 1 or 2, wherein the size of the hole (6) is from 50% to 90% of the size of the passage (4), preferably from 60% to 80%.

4. Automotive composite glass pane (V) according to one of claims 1 to 3, wherein the hole (6) is circular.

5. Automotive composite glass pane according to one of claims 1 to 4, wherein the composite glass pane (V) is an openable side window of a motor vehicle and the hole (6) is provided for connection to a lifting mechanism arranged in the vehicle body.

6. Automotive composite glass pane according to one of claims 1 to 5, wherein the first pane (1) and the second pane (2) contain glass, preferably soda-lime glass.

7. Method for manufacturing an automotive composite glass pane (V) with a through mounting hole according to one of claims 1 to 6, in which:
(a) a first pane (1) and a second pane (2) are each provided with at least one hole,
(b) the first pane (1), a thermoplastic interlayer (3), and the second pane (2) are arranged flat on top of each other, with said holes overlapping,
(c) the first pane (1) is bonded to the second pane (2) via the intermediate layer (3) by lamination, thereby forming the composite glass pane (V) and creating a through passage (4) from said holes and a hole in the intermediate layer (3),
(d) the edge (K) of the passage (4) is provided with a one-piece polymeric element (5) which has a continuous hole (6) running through the passage (4), wherein a tolerance ring is inserted as a polymeric element (5) into the passage (4), wherein the dimension of the tolerance ring transverse to the ring diameter corresponds to the corresponding dimension of the passage (4), wherein the tolerance ring is arranged completely within the area of the composite glass pane.

## Revendications

1. Vitrage composite automobile (V) avec un trou de montage traversant, comprenant au moins un premier vitrage (1) et un deuxième vitrage (2), qui sont reliés l'un à l'autre par une couche intermédiaire thermoplastique (3), et au moins un passage (4) s'étendant à travers l'ensemble de la vitre composite automobile (V), et un bord (K) du passage disposé à l'intérieur du passage, constitué des bords latéraux correspondants des deux vitrages (1, 2) et de la couche intermédiaire (3), dans lequel le bord (K) du passage (4) est muni d'un élément polymère monobloc (5) avec un trou traversant (6) s'étendant à travers le passage (4), dans lequel la première vitrage (1), la deuxième vitrage (2) et la couche intermédiaire (3) sont formées avec un trou et lesdits trous se chevauchent partiellement, formant ainsi le passage (4) dans la vitrage composite (V), dans lequel les bords des trous dans la première vitrage (1) et la deuxième vitrage (2) ont un décalage (x), dans lequel l'élément polymère (5) est une bague de tolérance dont la dimension transversale au diamètre de la bague correspond à la dimension correspondante du passage (4), la bague de tolérance étant située entièrement dans la zone de la vitrage composite.

2. Vitrage composite automobile (V) selon la revendication 1, dans lequel l'élément polymère (5) est renforcé par des fibres de verre ou des billes de verre et contient de préférence au moins du polyamide ou du polybutylène téréphtalate.

3. Vitrage composite automobile (V) selon l'une des revendications 1 ou 2, dans lequel la taille du trou (6) est comprise entre 50 % et 90 % de la taille du passage (4), de préférence entre 60 % et 80 %.

4. Vitrage composite automobile (V) selon l'une des revendications 1 à 3, dans lequel le trou (6) est circulaire.

5. Vitrage composite automobile selon l'une des revendications 1 à 4, dans lequel le vitrage composite (V) est une vitre latérale ouvrante d'un véhicule automobile et le trou (6) est prévu pour être relié à un mécanisme de levage disposé dans la carrosserie du véhicule.

6. Vitrage composite automobile selon l'une des revendications 1 à 5, dans lequel le premier vitrage (1) et le deuxième vitrage (2) contiennent du verre, de préférence du verre sodocalcique.

7. Procédé de fabrication d'un vitrage composite automobile (V) avec un trou de montage traversant selon l'une des revendications 1 à 6, dans lequel:
(a) une première vitrage (1) et une deuxième vitrage (2) sont chacune pourvues d'au moins un trou,
(b) la première vitrage (1), une couche intermédiaire thermoplastique (3) et la deuxième vitrage (2) sont disposées à plat les unes sur les autres, lesdits trous se chevauchant,
(c) la première vitrage (1) est collée à la deuxième vitrage (2) via la couche intermédiaire (3) par laminage, formant ainsi la vitrage composite (V) et créant un passage traversant (4) à partir desdits trous et d'un trou dans la couche intermédiaire (3),
(d) le bord (K) du passage (4) est muni d'un élément polymère monobloc (5) qui comporte un trou continu (6) traversant le passage (4), dans lequel une bague de tolérance est insérée en tant qu'élément polymère (5) dans le passage (4), dans lequel la dimension de la bague de tolérance transversale au diamètre de la bague correspond à la dimension correspondante du passage (4), dans lequel la bague de tolérance est disposée complètement dans la zone de la vitrage composite.
